# EUROPÄISCHE PATENTSCHRIFT

(11) **EP 1 152 180 B1**
(45) Veröffentlichungstag und Bekanntmachung des Hinweises auf die Patenterteilung: **03.08.2005**
(21) Anmeldenummer: 01110762.0
(22) Anmeldetag: 03.05.2001
(51) Int. Cl.: F16L 5/00, F16L 25/00

(54) **Armatur zum Befestigen eines Wellrohres in einer Wandöffnung**
Device for fixing a corrugated pipe into a wall opening
Dispositif de fixation pour un tuyau ondulé dans une ouverture murale

(30) Priorität: 05.05.2000 DE 20008148 U
(43) Veröffentlichungstag der Anmeldung: 07.11.2001
(73) Patentinhaber: Reiku GmbH, 51674 Wiehl-Bomig (DE)
(72) Erfinder: Rumpel, Jürgen, 51580 Reichshof-Mittelagger (DE)
(74) Vertreter: Glawe, Delfs, Moll & Partner

(56) Entgegenhaltungen:
- EP-A2- 0 967 701
- DE-A- 19 515 860
- DE-A1- 4 325 420
- FR-A- 2 528 533
- GB-A- 2 123 106

## Beschreibung

Die Erfindung betrifft eine Armatur zum Befestigen eines Wellrohres an oder in einer Wandöffnung. Derartige Armaturen dienen in erster Linie zum Befestigen von als Schutzrohre für Kabel dienenden Rohren an den Kabeleinführungsöffnungen von Gehäusen, Schaltschränken oder dergl. Das Wellrohr dient als Schutzrohr für in seinem Innern verlaufende Kabel, Elektroleitungen, optische Faserleitungen oder dergleichen, die durch die Wandöffnung in das Gehäuse hinein bzw. aus ihm heraus geführt werden. Das Wellrohr selbst kann in der Armatur vor der Wandöffnung enden, es kann aber auch durch die Armatur und die Wandöffnung hindurchgeführt sein und sich im Innern des Gehäuses fortsetzen.

Von Armaturen dieser Art wird gefordert, daß sie einfach und preisgünstig als Massenartikel, in der Regel durch Spritzgießen, herstellbar sind, daß sie eine sichere, wackelfreie und auch gegen größere Kräfte widerstandsfähige Befestigung der Armatur in der Wandöffnung ermöglichen, und daß das Wellrohr in der Armatur sicher festgelegt ist, ohne übermäßig großen Einspannkräften ausgesetzt zu werden. Da beim Anbringen der Armatur an einem Gehäuse oder dergl. das Gehäuseinnere häufig unzugänglich ist, muß das Befestigen der Armatur und das Festlegen des Wellrohres durch Einwirkung auf solche Teile der Armatur möglich sein, die in Einsteckrichtung vor der Wandöffnung, d.h. außerhalb des Gehäuses oder dergl., liegen.

Eine Armatur mit den Merkmalen des Oberbegriffs des Anspruchs 1 ist aus EP 0 967 701 A2 bekannt. Bei dieser bekannten Armatur ist das Einsteckende der Hülse durch Schlitze in Zungen unterteilt, die nach außen gerichtete Haltevorsprünge mit konischer Außenfläche für das Hintergreifen der Wandöffnung und sowie radial nach innen gerichtete Klauen für den Eingriff in die Wellennuten des Wellrohrs tragen. Ein Nachteil dieser bekannten Armatur besteht darin, daß durch das Verspannen der nach außen konischen Haltevorsprünge gegen den Rand der Wandöffnung eine radial nach innen gerichtete Reaktionskraft erzeugt wird, die über die Klauen auf das durch die Hülse hindurchgeführte Kabel, Rohr, Wellrohr oder dergl. übertragen wird. Das Kabel, Wellrohr oder dergl. wird somit beim Befestigen der Armatur in der Wandöffnung einer erheblichen radialen Druckbelastung ausgesetzt. Die Armatur ist deshalb zur Verwendung mit dünnwandigen Kabelschutz- Wellrohren nicht geeignet.

Aus DE 43 25 420 C2 ist eine Kabeldurchgangsvorrichtung bekannt, die eine das Kabel aufnehmende Klemmhülse, eine diese umgebende Steckmuffe mit Haltefingern für das Hintergreifen der Wandöffnung, und eine diese umgebende Klemmmutter aufweist. Die Steckmuffe weist ein sich konisch verengendes Ende auf, welches bei der Schraubbewegung der Klemmmutter über die Klemmfinger der Klemmhülse geschoben wird und diese radial nach innen verformt, so daß sie gegen die Außenseite des zu arretierenden Kabels gedrückt werden. Auch hier wird auf die Außenfläche des Kabels eine erhebliche radiale Druckkraft ausgeübt. Auch diese Armatur ist zur Verwendung mit dünnwandigen Kabelschutz-Wellrohren nicht geeignet.

Der Erfindung liegt die Aufgabe zugrunde, eine Armatur der angegebenen Art, unter Beachtung der eingangs erwähnten allgemeinen Anforderungen, so auszubilden, daß die Befestigung der Armatur in der Wandöffnung nicht zu einer radialen Belastung des in der Armatur aufgenommenen Wellrohres führt.

Die erfindungsgemäße Lösung der Aufgabe ist im Anspruch 1 angegeben. Die abhängigen Ansprüche beziehen sich auf weitere vorteilhafte Ausgestaltungen der erfindungsgemäßen Armatur.

Bei der erfindungsgemäßen Armatur sind die Funktionen der Befestigung der Armatur in der Wandöffnung und der Festlegung des Wellrohres in der Armatur räumlich und funktionell voneinander getrennt. Das in die Armatur eingesetzte Wellrohr wird durch die in ihrer elastischen Ruhestellung befindlichen, durch den Blockierabschnitt der Hülse blockierten Haltefinger festgelegt und ist keinen radial gerichteten Druckkräften ausgesetzt. Das Festspannen der Armatur in der Wandöffnung erfolgt mit den in den abhängigen Ansprüchen näher gekennzeichneten Befestigungsmitteln, die keine Rückwirkung auf die Festlegung des Wellrohres in der Armatur haben.

Ausführungsformen der Erfindung werden anhand der Zeichnungen näher erläutert. Es zeigt:
- Fig. 1:: eine erste Ausführungsform der erfindungsgemäßen Armatur im Axialschnitt
- Fig. 2 und 3:: die Hülse der Armatur von Fig. 1 in Seitenansicht bzw. im Schnitt nach der Linie III-III von Fig. 2
- Fig. 4:: die Schraubhülse der Armatur von Fig. 1 im Axialschnitt
- Fig. 5 u. 6:: den Anschlagring der Armatur von Fig. 1 im Axialschnitt bzw. in der Ansicht von unten
- Fig. 7, 8 u. 9:: die Armatur gemäß Fig. 1 im Axialschnitt in verschiedenen Stadien ihrer Befestigung in einer Wandöffnung
- Fig. 10:: in ähnlicher Darstellung wie Fig. 9, eine geänderte Ausführungsform der Armatur mit einer zusätzlichen Mutter
- Fig. 11:: in ähnlicher Darstellung wie Fig. 1, eine weitere Ausführungsform der Armatur ohne Anschlagring
- Fig. 12, 13 u. 14:: die Hülse der Armatur gemäß Fig. 11 in der Seitenansicht, im Schnitt nach der Linie A-A von Fig. 12 und in der Ansicht von unten aus der Richtung B von Fig. 12
- Fig. 15:: die Schraubhülse der Armatur von Fig. 11 im im Axialschnitt
- Fig. 16, 17 u. 18:: die Armatur gemäß Fig. 11 im Axialschnitt in verschiedenen Stadien ihrer Befestigung in einer Wandöffnung

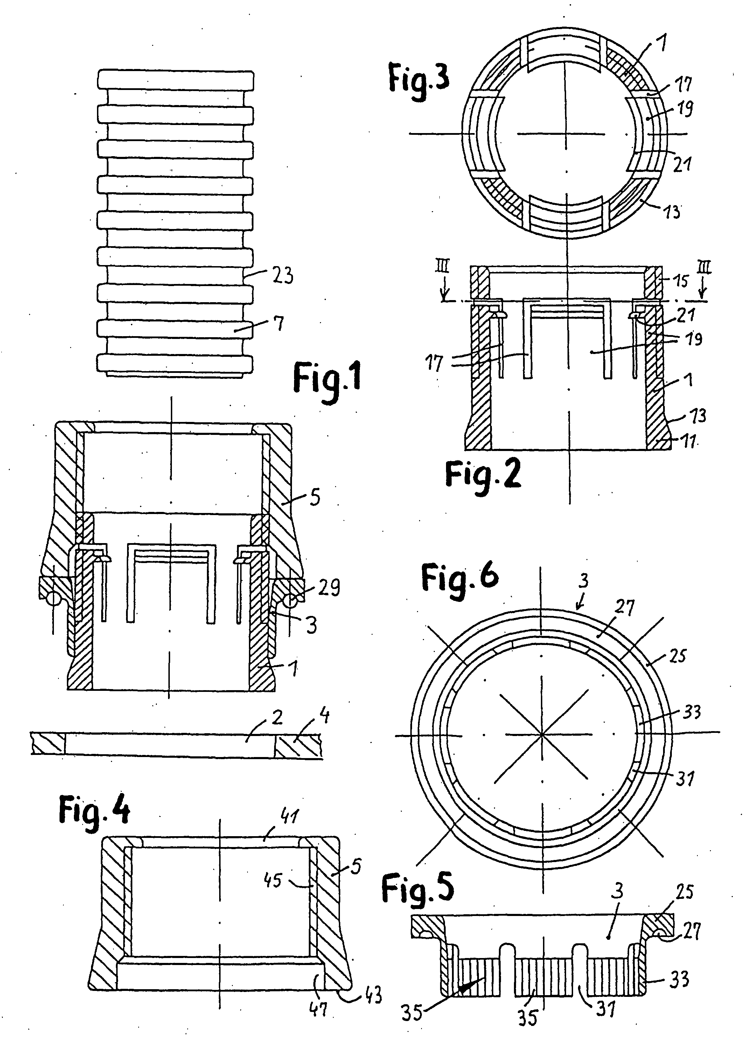

Die in Fig. 1 bis 9 dargestellte Armatur besteht im wesentlichen aus einer Hülse 1, einem die Hülse umgebenden Anschlagring 3 und einer auf die Hülse 1 aufgeschraubten Schraubhülse 5. Der von der Hülse 1 und Schraubhülse definierte innere Durchlaß ist für das Einführen bzw. Durchführen eines Wellrohres 7 angepaßt.

Die in Fig. 2 und 3 separat dargestellte Hülse 1 hat ein verdicktes Einsteckende 11, das zum Einstecken in eine Öffnung 2 einer Wand oder Platte 4 bestimmt ist und eine sich in Einsteckrichtung erweiternde konische Außenfläche 13 aufweist. In dem Bereich der Hülse, der bei in der Wandöffnung 2 montierter Armatur vor der Vorderfläche der Wand 4 liegt, ist die Hülse mit einem Außengewinde 15 versehen. Ferner sind in diesem Bereich in der Wandung der Hülse durch Schlitze 17 Haltefinger 19 ausgespart. Diese sind in der Radialrichtung biegeelastisch und tragen nach innen gerichtete Innenvorsprünge 21 für den Eingriff in eine Wellennut 23 (Fig. 1) des aufzunehmenden Wellrohres. Das Außengewinde 15 ist auch an der Außenseite der Haltefinger 19 vorgesehen.

Der in Fig. 5 und 6 dargestellte Anschlagring 3 hat einen radial nach außen abstehenden Flansch 25, der einen zur Anlage zur Vorderfläche der die Öffnung 2 aufweisenden Wand 4 bestimmten Anschlag bildet. In der unteren Fläche des Flansches 25 ist eine ringförmige Vertiefung 27 zur Aufnahme eines O-Rings 29 (Fig. 1) vorgesehen. Ferner weist der Anschlagring 3 eine vom Flansch 25 in Einsteckrichtung axial vorstehende Schürze auf, die durch axial verlaufende Schlitze in eine Anzahl von Zungen 33 unterteilt ist. Die Zungen 33 sind in Radialrichtung biegeelastisch. In ihrer elastischen Ruhestellung ist ihr Außendurchmesser an den Durchmesser der Wandöffnung 2, in der die Armatur befestigt werden soll, angepaßt, so daß sie in die Wandöffnung 2 einführbar sind. An ihrer inneren Umfangsfläche tragen die Zungen 33 eine in Axialrichtung verlaufende Rändelung oder Riefelung 35, die mit einer entsprechenden Rändelung oder Riefelung (nicht dargestellt) zusammen wirkt, die am Außenumfang der Hülse 1, insbesondere im Bereich der konischen Außenfläche 13 von deren Einsteckende 11, vorgesehen ist. Diese zusammenwirkenden Rändelungen oder Riefelungen wirken einem Verdrehen des Anschlagrings 3 auf der Hülse 1 entgegen.

Die in Fig. 4 dargestellte Schraubhülse 5 hat in ihrem oberen Ende eine Einführöffnung 41, die an den Außendurchmesser des aufzunehmenden Wellrohrs 7 (Fig. 1) angepaßt ist. Das untere Ende der Schraubhülse 5 ist verbreitert zur Bildung einer Auflagefläche 43, die zur Anlage gegen die Oberseite des Flansches 25 des Anschlagrings 3 bestimmt ist. An ihrer Innenseite trägt die Hülse 5 über den größeren Teil ihrer Länge einen Gewindeabschnitt 45 mit einem Innengewinde, das zu dem Außengewinde 15 der Hülse 1 (Fig. 2 und 3) paßt. In ihrem unteren Bereich hat die Schraubhülse 5 einen Abschnitt 47 mit größerem Durchmesser, der so bemessen ist, daß zwischen der Innenfläche des Abschnitts 47 und der Außenfläche der Haltefinger 19 der Hülse 1 ein radialer Spalt gebildet wird. Der Abschnitt 47 ist somit ein Freigabeabschnitt der ein radiales Aufbiegen der Haltefinger 19 für den Durchtritt des Wellrohres 7 gestattet. Wird die Schraubhülse 5 hingegen in eine solche Stellung gebracht, daß ihr Gewindeabschnitt 45 die oberen Enden der Haltefinger 19 der Hülse umgibt, dann haben die Haltefinger 19 im wesentlichen keinen radialen Spielraum nach außen. Der Gewindeabschnitt 45 ist somit gleichzeitig ein Blockierabschnitt, der die Haltefinger 19 gegen Aufbiegen nach außen blockiert.

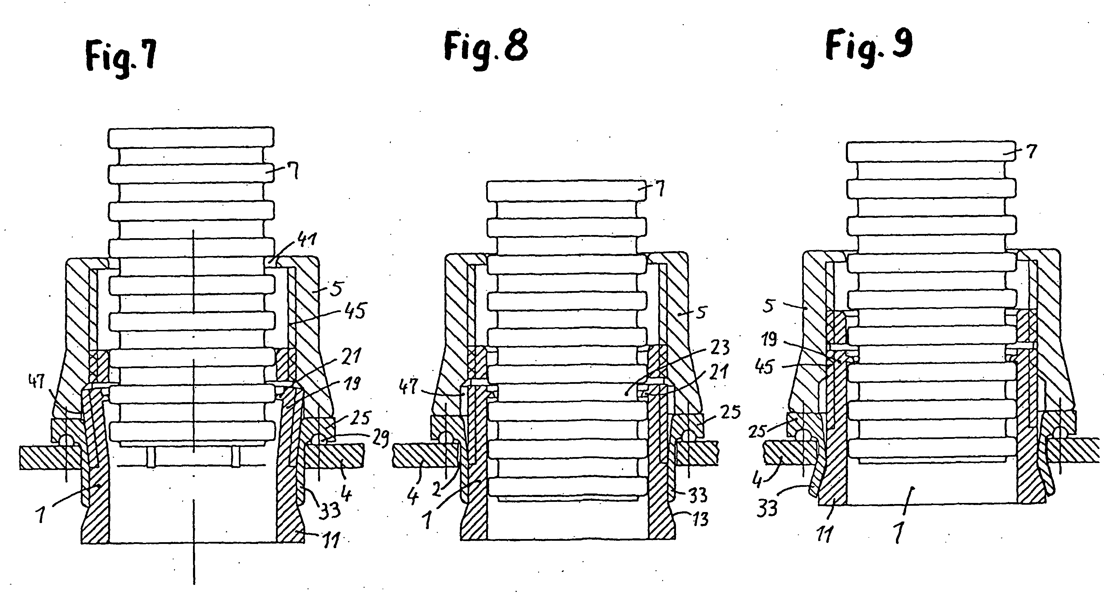

Die Fig. 7, 8 und 9 erläutert das Befestigen eines Wellrohres 7 mittels der erfindungsgemäßen Armatur in einer runden Öffnung 2 in der Wand 4 eines Gehäuses oder dergleichen. Gemäß Fig. 7 ist die Schraubhülse 5 nur soweit auf die Hülse 1 aufgeschraubt, daß sich der Freigabeabschnitt 47 mit größerem Durchmesser gegenüber den Haltefingern 19 der Hülse befindet und deren Aufbiegen radial nach außen gestattet. In diesem Zustand werden das Einsteckende 11 der Hülse 1 und die Zungen 33 des Anschlagrings 3 in die Öffnung 2 in der Wand 4 eingeschoben, bis die Unterseite des Flansches 25 bzw. der daran angebrachte O-Ring 29 an der Vorderseite der Wand 4 anliegt.

Ein Wellrohr 7 wird durch die Einführöffnung 41 der Schraubhülse 5 in die Armatur eingesteckt, wobei die Haltefinger 19 elastisch nach außen gebogen werden, so daß ihre Innenvorsprünge 21 die Wellenberge des Wellrohrs 7 passieren lassen. Die Innenvorsprünge 21 tragen an ihrer der Einschubrichtung des Wellrohrs 7 entgegengerichteten Vorderseite eine Abschrägung oder Abrundung (siehe Fig. 2), so daß sie durch die Einschiebekraft des Wellrohrs 7 nach außen gedrückt werden. Das Wellrohr 7 kann beliebig weit die Armatur eingesteckt bzw. durch sie hindurch in das Innere des Gehäuses weitergeschoben werden. Auch der Zeitpunkt des Einschiebens des Wellrohrs 7 in die Armatur ist beliebig. Man kann zuerst die Armatur in die Wandöffnung 2 einstecken und dann das Wellrohr 7 einschieben. Man kann auch zuerst das Wellrohr 7 in die Armatur einschieben und diese dann zusammen mit dem Wellrohr 7 in die Wandöffnung 2 einstecken.

Ist die Armatur in die Öffnung 2 der Wand 4 eingesteckt und das Wellrohr 7 bis zu der gewünschten Position in die Armatur eingeschoben oder durch sie hindurchgeschoben, so ist der Zustand gemäß Fig. 8 erreicht, in welchem die Innenvorsprünge 21 der Haltefinger 19 in eine gewünschte Wellennut 23 des Wellrohrs 7 eingerastet sind und die Haltefinger 19 wieder ihre elastische Ruhestellung in Flucht mit der Außenfläche der Hülse 1 eingenommen haben.

Ausgehend von der Stellung gemäß Fig. 8 kann nun durch Drehen der Schraubhülse 5 die Befestigung bzw. Verklemmung der Armatur in der Wandöffnung 2 bewirkt werden. Durch Anziehen der Schraubhülse 5 wird die Hülse 1 in die Schraubhülse 5 und in den Anschlagring 25 hineingezogen. Hierdurch wird eine zweifache Wirkung erreicht. Einerseits werden die Zungen 33 des Anschlagrings 5 auf die konische Außenfläche 13 des Einsteckendes 11 der Hülse 1 aufgeschoben und dadurch radial nach außen aufgeweitet, so daß sie den Rand der Wandöffnung 2 hintergreifen. Bei weiterem Festziehen der Schraubhülse 5 wird der Rand der Wandöffnung 2 zwischen den nach außen aufgeweiteten Zungen 33 und dem Flansch 25 des Anschlagrings 3 eingespannt und die Armatur dadurch an der Wand 4 befestigt. Die zweite Wirkung besteht darin, daß der Gewindeabschnitt 45 an der Innenseite der Schraubhülse 5 sich nach unten über die Haltefinger 19 der Hülse 1 schiebt und diese gegen Aufbiegen radial nach außen blokkiert. Hierdurch können die Innenvorsprünge 21 der Haltefinger 19 das Wellrohr 7 nicht mehr freigeben.

Man erkennt aus Fig. 7, daß ein Festziehen der Schraubhülse 5 relativ zur Hülse 1 nicht möglich ist, solange die Innenvorsprünge 21 der Haltefinger 19 nicht in ein Wellental 23 des Wellrohres 7 eingerastet sind und die Haltezunge 19 noch radial nach außen gespreizt sind. Diese Ausführungsform gibt somit dem Benutzer die Gewähr, daß eine feste und wackelfreie Befestigung der Armatur in der Wandöffnung 2 nur dann möglich ist, wenn das Wellrohr 7 in der Armatur sicher festgelegt und gegen ungewolltes Herausziehen blockiert ist.

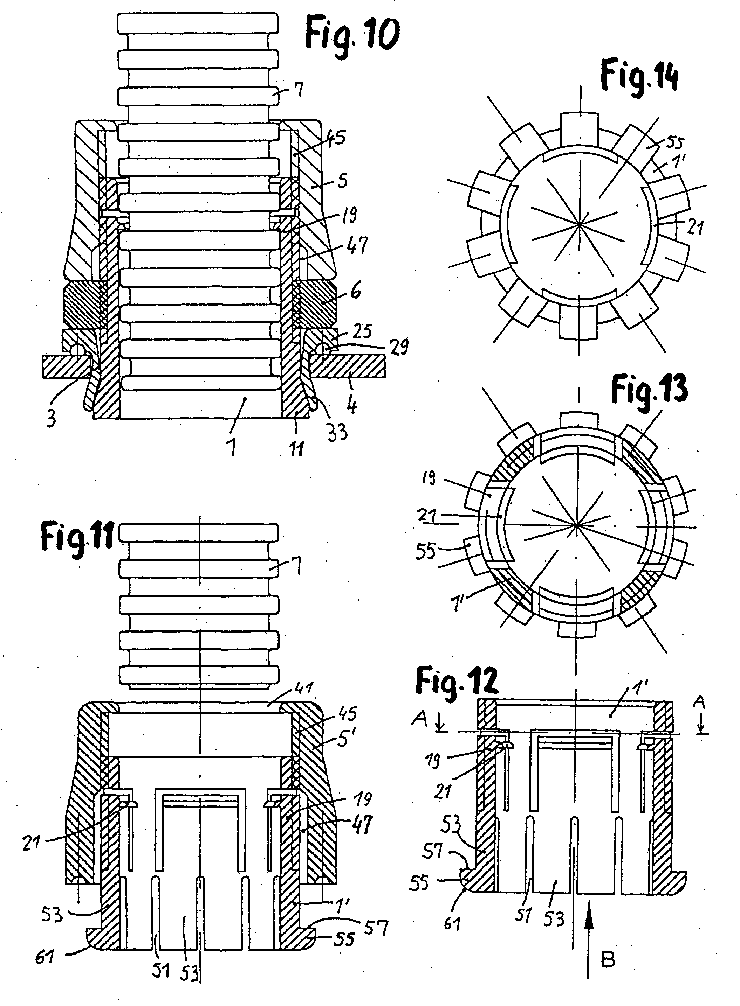

Bei der in Fig. 10 dargestellten zweiten Ausführungsform der erfindungsgemäßen Armatur sind diejenigen Teile, die mit denen gemäß Fig. 1 bis 9 übereinstimmen, mit den gleichen Bezugszeichen bezeichnet und werden nicht näher erläutert. Der Unterschied zwischen der Ausführungsform gemäß Fig. 10 und der Ausführungsform gemäß Fig. 1 bis 9 besteht darin, daß zusätzlich zu der Schraubhülse 5, und zwar zwischen dieser und dem Anschlagring 3, eine Mutter 6 vorgesehen ist, die ebenfalls mit dem Außengewinde 15 der Hülse 1 im Gewindeeingriff steht. Während bei der Ausführungsform nach Fig. 1 bis 9 die Schraubhülse 5 eine doppelte Funktion ausübt, nämlich einerseits die Aufbringung der Einspannkraft, mit der der Rand der Wandöffnung 2 zwischen den Zungen 33 und dem Flansch 25 des Anschlagrings 3 eingespannt wird, und andererseits die Freigabe bzw. Blockierung der Haltefinger 19 mittels des Freigabeabschnitts 47 bzw. des Gewinde- und Blockierabschnitts 45, hat die Schraubhülse 5 bei der Ausführungsform gemäß Fig. 10 nur noch die Funktion der Blockierung bzw. der Freigabe der Haltefinger 19. Die Aufbringung der Einspannkraft, mit der die Hülse 1 in den Anschlagring 3 hineingezogen und dadurch die Zungen 33 aufgeweitet und gegen den Rand der Öffnung 2 verspannt werden, erfolgt bei dieser Ausführungsform durch Festschrauben der Mutter 6 unabhängig von der Schraubhülse 5. Hierdurch ist es bei dieser Ausführungsform möglich, zuerst die "leere" Armatur ohne das Wellrohr 7 in der Wandöffnung 2 einzusetzen und mittels der Mutter 6 fest zu verspannen und erst anschließend das Wellrohr 7 einzustecken und durch Festziehen der Schraubhülse 5 zu blockieren.

Auch bei der Ausführungsform gemäß Fig. 11 bis 18 sind alle Teile, die denen gemäß Fig. 1 bis 9 entsprechen, mit den gleichen Bezugszeichen bezeichnet und werden nicht nochmals erläutert. Die Ausführungsform nach Fig. 11 bis 18 unterscheidet sich von der gemäß Fig. 1 bis 9 hauptsächlich dadurch, daß sie nur aus zwei Teilen besteht, nämlich der Hülse und der Schraubhülse, die hier mit 1' bzw. 5' bezeichnet sind, da sie sich in Einzelheiten von den entsprechenden Teilen 1 und 5 gemäß Fig. 1 und 9 unterscheiden. Der bei der Ausführungsform nach Fig. 1 bis 9 vorgesehene Anschlagring 3 ist bei dieser Ausführungsform weggelassen.

Das Einsteckende der Hülse 1' ist durch in Achsrichtung verlaufende Schlitze 51 in eine Anzahl von Zungen 53 unterteilt, die in Radialrichtung biegeelastisch sind. Jede Zunge 53 trägt an ihrem freien Ende einen nach außen gerichteten Haltevorsprung 55. Die bezüglich der Einsteckrichtung hinten liegende Rückfläche 57 jedes Haltevorsprungs 55 liegt in einer Radialebene, wenn die zugehörige Zunge 53 ihre elastisch entspannte Ruhelage, d.h. eine Stellung parallel zur Achse der Armatur einnimmt.

In allen übrigen Merkmalen stimmt die Hülse 1' mit der Hülse 1 gemäß Fig. 1 bis 9 überein, insbesondere was die Ausgestaltung der Haltefinger 19 mit Innenvorsprüngen 21 betrifft.

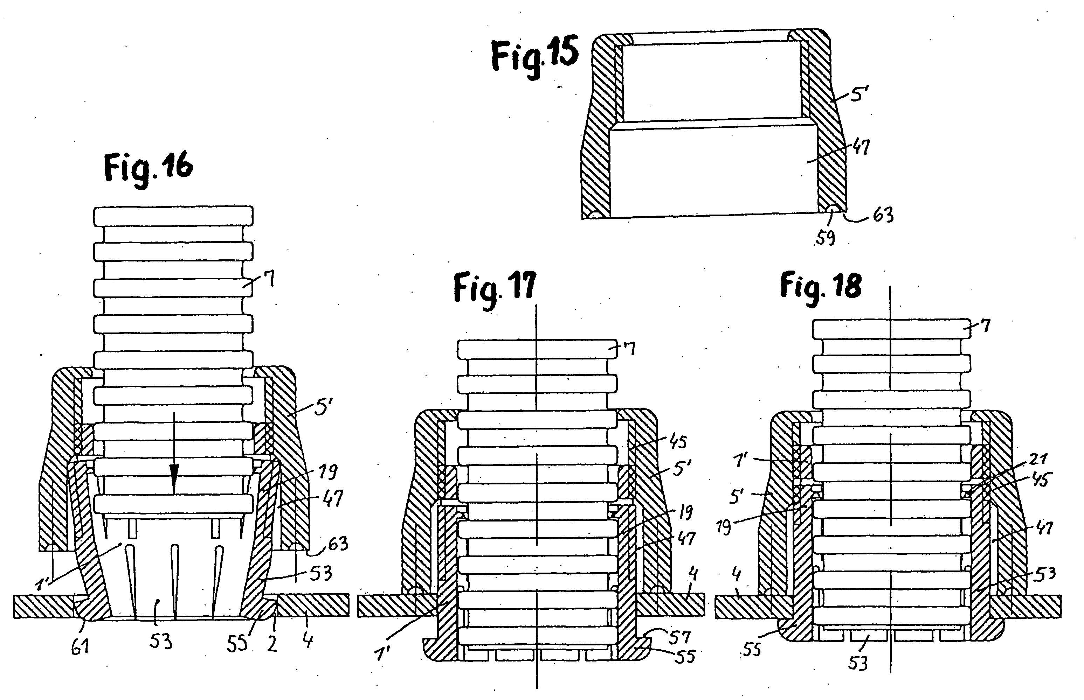

Die in Fig. 15 gesondert dargestellte Schraubhülse 5' entspricht weitgehend der Schraubhülse 5 gemäß Fig. 4, mit dem Unterschied, daß die Schraubhülse 5' in Achsrichtung länger ausgebildet ist, und insbesondere an ihrer Innenseite einen längeren Freigabebereich 47' aufweist. An ihrer unteren Stirnfläche 63 hat die Schraubhülse 5' eine Ausnehmung 59 für die Aufnahme eines O-Rings (nicht dargestellt). Diese untere Stirnfläche 63 bildet bei dieser Ausführungsform für die Anlage gegen die Vorderfläche der Wand 4.

Die Befestigung eines Wellrohrs 7 mittels der Armatur gemäß dieser Ausführungsform ist in Fig. 15 bis 17 dargestellt. Die Schraubhülse 5' ist nur soweit auf die Hülse 5' aufgeschraubt, daß sich der Freigabebereich 47' gegenüber den Haltefingern 19 befindet und diese somit Spielraum für das elastische Aufspreizen radial nach außen haben. Ein Wellrohr 7 wird gemäß Fig. 15 in die Hülse 1' eingeschoben, wobei die Wellenberge des Wellrohres 7 die Haltefinger 19 elastisch nach außen drücken. Dieses Aufspreizen der Haltefinger 19 unterstützt das elastische Verbiegen der Zungen 53 am Einsteckende der Hülse 1' nach innen. Dieses Einsteckende wird dann in die Öffnung 2 der Wand 4 eingesteckt, wobei die Zungen 53 noch weiter radial nach innen gebogen werden, bis die Haltevorsprünge 55 den Rand der Öffnung 4 passieren können. Eine Abrundung oder Abschrägung 61 an der vorderen Stirnfläche jedes Haltevorsprungs 55 unterstützt durch Zusammenwirken mit dem Rand der Öffnung 2 das radiale Zusammendrücken der Zungen 53.

Nach dem Durchführen der Haltevorsprünge 55 durch die Öffnung 2 der Wand 4 federn die Zungen 53 wieder radial nach außen in ihre elastische Ruhelage, so daß die Haltevorsprünge 55 die Rückseite der Wand 4 hintergreifen, wie in Fig.16 dargestellt. Nunmehr kann auch das Wellrohr 7 weiter in die Hülse 1' hinein bzw. durch diese hindurchgesteckt werden, bis die Innenvorsprünge 21 der Haltefinger 19 in eine gewünschte Wellennut des Wellrohres 7 einrasten. Die untere Stirnfläche der Schraubhülse 5' bzw. der an ihr angeordnete O-Ring (nicht dargestellt) kommt zur Anlage an der Vorderfläche der Wand 4. Dieser Zustand ist in Fig. 17 dargestellt.

Anschließend wird die Schraubhülse 5' festgeschraubt und dadurch die Hülse 1' nach oben in die Schraubhülse 5' hineingezogen. Hierdurch wird die Stellung gemäß Fig. 18 erreicht, in welcher die Wand 4 zwischen den Haltevorsprüngen 55 der Hülse 1' und der unteren Stirnfläche der Schraubhülse 5' eingespannt wird. Da die an der hinteren Fläche der Wand 4 anliegenden Rückflächen 57 der Haltevorsprünge 55 in einer radialen Ebene liegen, treten ausschließlich axiale Einspannkräfte auf. Auf die Zungen 53 der Hülse 1' wirken keine radialen Kräfte, und deshalb ist auch das Wellrohr 7 keinen radialen Belastungen durch die Befestigung der Armatur an der Wand 4 ausgesetzt. Durch das Festziehen der Schraubhülse 5' hat sich ferner deren innerer Gewinde- und Blockierabschnitt 45 nach unten in den Bereich der Haltefinger 19 bewegt, so daß diese gegen ein radial nach außen gerichtetes Aufbiegen blockiert sind und mit ihren Innenvorsprüngen 21 das Wellrohr 7 unlösbar festhalten.

## Patentansprüche

1. Armatur zum Befestigen eines Wellrohres (7) an oder in einer Wandöffnung (2),
mit einer Hülse (1, 1') zur Aufnahme des Wellrohrs (7), die ein Einsteckende (11) zum Einstecken in die Wandöffnung (2) aufweist,
Befestigungsmitteln zum Festlegen der Hülse (1, 1') in der Wandöffnung (4),
einer die Hülse umgebenden Schraubhülse (5, 5') mit Innengewinde (45) für den Eingriff mit einem Außengewinde (15) der Hülse (1, 1'),
und mindestens einem an der Hülse (1, 1') einstückig ausgebildeten Haltefinger (19), der in Radialrichtung elastisch bewegbar ist und mindestens einen radial nach innen gerichteten Innenvorsprung (21) für den Eingriff in eine Wellennut (23) des Wellrohrs (7) trägt, **dadurch gekennzeichnet, daß** der oder jeder Haltefinger (19) in einem im Abstand vom Einstekkende (11) liegenden, von der Schraubhülse (5, 5') umgebenen Bereich der Hülse (1, 1') angeordnet ist,
und daß die Innenwandung der Schraubhülse (5, 5') zwei in Achsrichtung aneinander grenzende Abschnitte (45, 47) unterschiedlichen Durchmessers aufweist, von denen der Abschnitt größeren Durchmessers ein Freigabeabschnitt (47) ist, der dem oder jedem Haltefinger (19) mit radialem Abstand gegenübersteht und dessen radiales Aufbiegen für den Durchtritt des Wellrohrs (7) gestattet, und der Abschnitt kleineren Durchmessers ein Blockierabschnitt (45) ist, der durch die Schraubbewegung der Schraubhülse (5, 5') in eine Stellung gegenüber dem oder jedem Haltefinger (19) bewegbar ist und diesen dann gegen radiales Aufbiegen blockiert.

2. Armatur nach Anspruch 1, **dadurch gekennzeichnet, daß** die Befestigungsmittel zum Festlegen der Hülse (1, 1') in der Wandöffnung (2) einerseits aus radial nach außen gerichteten Haltevorsprüngen (33, 55) bestehen, die in die Wandöffnung (2) einführbar und radial nach außen spreizbar sind, so daß sie die Wandöffnung hintergreifen, und andererseits aus einem an der Außenseite der Hülse axial beweglich angeordneten Anschlag (25, 63), der gegen die in Einsteckrichtung vorne liegende Vorderfläche der die Wandöffnung (2) umgebenden Wand (4) anpreßbar ist.

3. Armatur nach Anspruch 2, **dadurch gekennzeichnet, daß** der Anschlag (63) an der Schraubhülse (5') ausgebildet ist.

4. Armatur nach Anspruch 2, **dadurch gekennzeichnet, daß** der Anschlag (25) an einem die Hülse (1) umgebenden und an ihr verschiebbar geführten Anschlagring (3) ausgebildet ist.

5. Armatur nach Anspruch 4, **dadurch gekennzeichnet, daß** der Anschlagring (3) durch die Schraubhülse (5) gegen die Vorderfläche der Wand (4) anpreßbar ist.

6. Armatur nach Anspruch 4, **dadurch gekennzeichnet, daß** zum Anpressen des Anschlags (25) gegen die Vorderfläche der Wand (4) eine zusätzliche Mutter (6) vorgesehen ist, die zwischen dem Anschlag (25) und der Schraubhülse (5) angeordnet ist und mit einem Außengewindeabschnitt (15) der Hülse (1) in Gewindeeingriff steht.

7. Armatur nach Anspruch 3 oder 5, **dadurch gekennzeichnet, daß** durch die das Anpressen des Anschlags (25, 63) gegen die Vorderfläche der Wand (4) bewirkende Schraubbewegung der Schraubhülse gleichzeitig deren Blockierbereich (45) über den oder jeden Haltefinger (19) der Hülse (1, 1') bewegt wird.

8. Armatur nach Anspruch 4, **dadurch gekennzeichnet, daß** das Einsteckende (11) der Hülse (1) eine sich in Einsteckrichtung erweiternde konische Außenfläche (13) aufweist und daß die Haltevorsprünge als am Anschlagring in Einsteckrichtung axial vorstehende Zungen (33) ausgebildet sind, die in die Wandöffnung (2) einführbar und durch Verschieben relativ zu der konischen Außenfläche (13) des Einsteckendes (11) der Hülse (1) radial aufweitbar sind.

9. Armatur nach Anspruch 2 oder 3, **dadurch gekennzeichnet, daß** das Einsteckende der Hülse (1') durch Schlitze (51) in elastisch biegbare Zungen (53) unterteilt ist, die nach außen abstehende Haltevorsprünge (55) tragen, die unter elastischer Verbiegung der Zungen (53) nach innen durch die Wandöffnung (2) hindurchführbar sind und dann durch elastisches Auswärtsfedern der Zungen (53) die Wand (4) hintergreifen, wobei die an der Rückfläche der Wand (4) zur Anlage kommenden Rückflächen (57) der Haltevorsprünge in einer Radialebene liegen.

10. Armatur nach Anspruch 4, **dadurch gekennzeichnet, daß** an der Innenfläche des Anschlagrings (3) und an der Außenseite der Hülse (1) eine Rändelung oder Riefen ausgebildet sind, die einem Verdrehen des Anschlagrings (3) relativ zur Hülse (1) entgegenwirken.

11. Armatur nach einem der vorgehenden Ansprüche, **dadurch gekennzeichnet, daß** an dem zur Anlage an der Vorderfläche der Wand bestimmten Anschlag (25, 63) eine Aufnahme für einen Dichtring (29), insbesondere einen O-Ring, vorgesehen ist.

## Claims

1. A fitting for fastening a corrugated pipe (7) on or in a wall opening (2),
with a sleeve (1,1') for accommodating the corrugated pipe (7), which sleeve has a plug-in end (11) for insertion into the wall opening (2),
fastening means for locating the sleeve (1,1') in the wall opening (4),
a threaded sleeve (5,5') surrounding the sleeve and with an internal screw-thread (45) for engagement with an external screw-thread (15) of the sleeve (1,1'),
and at least one retaining finger (19) which is formed in one piece on the sleeve (1,1') and which is movable elastically in a radial direction and carries at least radially inwardly directed inner projection (21) for engagement in a groove (23) of the corrugated pipe (7),
**characterised in that** the or each retaining finger (19) is disposed in a region of the sleeve (1,1') spaced apart from the plug-in end (11) and surrounded by the threaded sleeve (5,5'),
and **in that** the inner wall of the threaded sleeve (5,5') has two portions (45,47) of different diameter and adjoining one another in axial direction, of which the portion of larger diameter is a release portion (47) which is situated opposite the or each retaining finger (19) at a radial distance and the radial bending-up of which allows the passage of the corrugated pipe (7), and the portion of smaller diameter is a locking portion (45) which can be moved by the screwing motion of the threaded sleeve (5,5') into a position opposite the or each retaining finger (19) and then locks the latter from being bent up radially.

2. A fitting according to Claim 1, **characterised in that** the fastening means for locating the sleeve (1,1') in the wall opening (2) comprise, on the one hand, radially outwardly directed retaining projections (33,55) which can be inserted into the wall opening (2) and can be expanded radially outward so that they engage behind the wall opening and, on the other hand, they comprise a stop member (25,63) which is axially movable on the outside of the sleeve and which can be pressed against the front surface of the wall (4) surrounding the wall opening (2) situated at the front in the insertion direction.

3. A fitting according to Claim 2, **characterised in that** the stop member (63) is formed on the threaded sleeve (5').

4. A fitting according to Claim 2, **characterised in that** the stop member (25) is formed on a stop ring (3) surrounding the sleeve (1) and guided displaceably thereon.

5. A fitting according to Claim 4, **characterised in that** the stop ring (3) can be pressed against the front surface of the wall (4) by the threaded sleeve (5).

6. A fitting according to Claim 4, **characterised in that** the an additional nut (6) is provided for pressing the stop member (25) against the front surface of the wall (4), which nut is disposed between the stop member (25) and the threaded sleeve (5) and is in threaded engagement with an externally threaded portion (15) of the sleeve (1).

7. A fitting according to Claim 3 or 5, **characterised in that**, as a result of the screwing motion of the threaded sleeve inducing the pressing of the stop member (25,63) against the front surface of the wall (4), at the same time its locking zone (45) is moved via the or each retaining finger (19) of the sleeve (1,1').

8. A fitting according to Claim 4, **characterised in that** the plug-in end (11) of the sleeve (1) has a conical outer surface (13) widening in the plug-in direction, and **in that** the retaining projections are in the form of tongues (33) which project axially on the stop ring in the insertion direction and which can be inserted into the wall opening (2) and can be expanded radially by displacement relative to the conical outer surface (13) of the plug-in end (11) of the sleeve (1).

9. A fitting according to Claim 2 or 3, **characterised in that** the plug-in end of the sleeve (1') is divided by slots (51) into elastically flexible tongues (53) which have outwardly protruding retaining projections (55) which, with elastic bending of the tongues (53), can be guided inwards through the wall opening (2) and then engage behind the wall (4) as a result of elastic outward deflection of the tongues (53), whereupon the rear faces (57) of the retaining projections abutting against the rear face of the wall (4) lie in a radial plane.

10. A fitting according to Claim 4, **characterised in that** knurling or flutes are formed on the inner surface of the stop ring (3) and on the outside of the sleeve (1), which counteract twisting of the stop ring (3) relative to the sleeve (1).

11. A fitting according to any one of the preceding Claims, **characterised in that** a seat for a sealing ring (29), in particular an O-ring, is provided on the stop member (25,63) intended to abut against the front surface of the wall.

## Revendications

1. Dispositif de fixation pour un tuyau cannelé (7) sur ou dans une ouverture de cloison (2),
avec une douille (1, 1') pour recevoir le tuyau cannelé (7) qui présente une extrémité d'introduction (11) pour l'introduction dans l'ouverture de cloison (2),
des moyens de fixation pour fixer la douille (1, 1') dans l'ouverture de la cloison (4),
une douille taraudée (5, 5') entourant la douille avec un taraudage (45) pour la prise avec un filetage extérieur (15) de la douille (1, 1'),
et porte au moins une doigt de maintien (19) formé d'une seule pièce dans la douille (1, 1') qui peut être élastiquement déplacé en direction radiale et au moins une saillie intérieure (21) dirigée radialement vers l'intérieur pour pénétrer dans un creux d'ondulation (23) du tuyau cannelé (7) **caractérisé en ce que** le ou chaque doigt de maintien (19) est disposé dans une zone de la douille (1, 1') se trouvant à l'écart de l'extrémité d'introduction (11) entourée par la douille taraudée (5, 5') et **en ce que** la paroi intérieure de la douille taraudée (5, 5') présente deux sections (45, 47) voisines entre elles en direction radiale et de diamètres différents, dont celle de plus grand diamètre est une section de libération (47) qui fait face au ou à chaque doigt de maintien (19) avec une intervalle radial et dont le pliage radial autorise le passage du tuyau cannelé (7) et la section de plus petit diamètre est une section de blocage (45), qui peut être déplacée grâce au mouvement de vissage de la douille taraudée (5, 5') dans une position vis-à-vis du ou de chaque doigt de maintien (19) et empêcher celui-ci de se courber radialement.

2. Dispositif de fixation selon la revendication 1, **caractérisé en ce que** les moyens de fixation de la douille (1, 1') dans l'ouverture de cloison (2) sont constitués, d'une part, par des saillies de maintien (33, 35) dirigées radialement vers l'extérieur, qui peuvent être introduites dans l'ouverture de cloison (2) et s'évasent radialement vers l'extérieur, de sorte qu'elles s'accrochent derrière la cloison et, d'autre part, par une butée (25, 63) disposée axialement déplaçable sur la paroi extérieure de la douille, qui peut être pressée contre la surface de la cloison (4) entourant l'ouverture (2) se situant en avant dans le sens de l'introduction.

3. Dispositif de fixation selon la revendication 2, **caractérisé en ce que** la butée (63) est formée sur la douille taraudée (5').

4. Dispositif de fixation selon la revendication 2, **caractérisé en ce que** la butée (25) est formée sur une bague de butée (3) entourant la douille (1) et guidé à glissement sur elle.

5. Dispositif de fixation selon la revendication 4, **caractérisé en ce que** la bague de butée (3) est pressé contre la surface avant de la cloison (4) par la douille taraudée (5).

6. Dispositif de fixation selon la revendication 4, **caractérisé en ce qu'**il est prévu un écrou supplémentaire (6) pour presser la butée (25) contre la surface avant de la cloison (4), qui est disposé entre la butée (25) et la douille taraudée (5) et se trouve en liaison de vissage avec une section de filetage extérieur (15) de la douille (1).

7. Dispositif de fixation selon la revendication 3 ou 5, **caractérisé en ce que** grâce au mouvement de vissage de la douille taraudée (5) provoquant l'application de la butée (25, 63) contre la cloison (4), simultanément la zone de blocage (45) de celle-ci est déplacé par-dessus le ou chaque doigt de maintien (19) de la douille (1, 1').

8. Dispositif de fixation selon la revendication 4, **caractérisé en ce que** l'extrémité d'introduction (11) de la douille (1) présente une surface extérieure (13) conique s'élargissant dans le sens de l'introduction et **en ce que** les saillies de maintien sont formées par des languettes (33) dépassant axialement en avant de la bague annulaire dans le sens d'introduction, qui sont introduites dans l'ouverture de cloison (2) et s'évasant radialement vers l'extérieur par déplacement relativement à la surface extérieure conique (13) de l'extrémité d'introduction (11) de la douille (1).

9. Dispositif de fixation selon la revendication 2 ou 3, **caractérisé en ce que** l'extrémité d'introduction de la douille (1') est divisée par des fentes (51) en languettes se courbant élastiquement (53) portant vers l'extérieur des saillies séparées par des intervalles, qui sont guidées vers l'intérieur à travers l'ouverture de cloison (2) sous l'effet de la courbure élastique des languettes (53) et s'accrochent alors derrière la cloison (4), les surfaces arrières (57) des saillies de maintien s'appliquant contre la surface arrière de la cloison (4) se trouvant dans un plan radial.

10. Dispositif de fixation selon la revendication 4, **caractérisé en ce que** sur la surface intérieure de la bague de butée (3) et sur la face extérieure de la douille (1), sont formés un moletage ou des cannelures qui empêchent une rotation de la bague de butée (3) par rapport à la douille (1).

11. Dispositif de fixation selon l'une des revendications précédentes, **caractérisé en ce que** sur la butée (25, 63) destinée à être appliquée contre la surface avant de la cloison, est prévu un logement pour un joint annulaire (29), notamment un joint torique.
